# EUROPÄISCHE PATENTSCHRIFT

(11) **EP 2 615 022 B1**
(45) Veröffentlichungstag und Bekanntmachung des Hinweises auf die Patenterteilung: **12.10.2016**
(21) Anmeldenummer: 12192379.1
(22) Anmeldetag: 13.11.2012
(51) Int. Cl.: B62M 6/50, B62M 6/55

(54) **Antriebsvorrichtung für ein Elektrofahrrad mit Kraftmessung zur Fahrerwunscherkennung**
Drive device for an electric bicycle with force measurement for detection of the rider's intentions
Dispositif d'entraînement pour un vélo électrique avec mesure de force destinée à la détection du souhait du conducteur

(30) Priorität: 10.01.2012 DE 102012200232
(43) Veröffentlichungstag der Anmeldung: 17.07.2013
(73) Patentinhaber: Robert Bosch GmbH, 70442 Stuttgart (DE)
(72) Erfinder: Kimmich, Peter, 71144 Steinenbronn (DE)

(56) Entgegenhaltungen:
- WO-A1-2011/113642
- JP-A- 10 001 085
- JP-A- 2003 019 996
- US-A- 5 758 736
- US-A- 6 073 717
- US-A1- 2002 173 397

## Beschreibung

### Stand der Technik

Die vorliegende Erfindung betrifft eine Antriebsvorrichtung für ein Elektrofahrrad, ein Steuergerät für ein Elektrofahrrad, und ein Elektrofahrrad, das diese Komponenten enthält. Dabei wird die vom Fahrer aufgebrachte Antriebskraft bestimmt, um diese um eine passende elektrische Antriebskraft zu ergänzen.

Ein Elektrofahrrad soll dem Fahrer die Fortbewegung erleichtern. Dazu wird von einem elektrischen Antriebssystem ein zusätzliches Drehmoment erzeugt, dass neben dem von dem Fahrer durch den Kurbeltrieb erzeugten Drehmoment auf das Antriebsrad des Fahrrads aufgebracht wird. Die Auslegung des Antriebssystems muss jedoch den Fahrkomfort, die Performance der verwendeten Komponenten, und rechtliche Zulassungsaspekte gleichermaßen berücksichtigen. Es hat sich daher bewährt, das elektrische Antriebsmoment in Abhängigkeit des manuellen Antriebsmoments zu erzeugen. Es hat sich jedoch gezeigt, dass die zur Bestimmung des vom Fahrer aufgebrachten Drehmoments verwendete Sensorik oftmals fehleranfällig ist, da die Sensoren unmittelbar an exponierten Orten vorgesehen sein müssen.

Der oben genannte Stand der Technik ist beispielsweise aus der WO 2011/113642 A1 bekannt. Ein weiteres Beispiel für den oben genannten Stand der Technik kann aus der US 6,073,717 A entnommen werden.

Die DE 10 2010 028 643 versucht, der geschilderten Problematik zu begegnen, indem eine zusätzliche Sensorwelle eingeführt wird. Von der Tretwelle wird das vom Fahrer erzeugte Drehmoment über ein Zahnradgetriebe auf eine Sensorwelle übertragen. Die Sensorwelle überträgt, ebenfalls über ein Zahnradgetriebe, das Drehmoment auf eine die Tretwelle umgebende Hohlwelle. Die Hohlwelle fungiert als Abtriebsachse und überträgt das Drehmoment auf das Antriebsrad. Bei dieser Getriebeanordnung sind die Lagerkräfte der Sensorwelle ein direktes Maß für das vom Fahrer aufgebrachte Drehmoment. Daher wird der Antriebsmotor entsprechend den Auflagerkräften der Sensorwelle angesteuert.

Aus der DE 10 2010 001 775 A1 ist ein elektrisches Fahrrad bekannt, das ebenfalls den elektrischen Antrieb abhängig von der durch den Fahrer aufgebrachten Pedalkraft steuert. Hierfür wird die Änderung der Kraft in der Antriebskette gemessen, die ein Maß für das vom Fahrer aufgebrachte Drehmoment ist. Bei einem herkömmlichen Fahrrad ist die Nabe des hinteren, als Antriebsrad fungierenden Rades, über eine Hinterstrebe mit der Tretwelle verbunden. Wird nun die Nabe über eine Kette mit einem auf der Tretwelle angebrachten Kettenblatt verbunden, so kann die Kettenkraft durch die Lagerkraft der Tretwelle in Richtung der Mittelachse der Hinterstrebe bestimmt werden. Die Lagerkraft wird über einen Drucksensor gemessen und dient als Basis für die Steuerung des elektrischen Antriebs.

Die Lehren der beiden Druckschriften weisen jedoch einige Nachteile auf: So ist beispielsweise bei einem Fahrrad gemäß der ersten beschriebenen Druckschrift eine zusätzliche Getriebestufe notwendig. Dies erhöht sowohl den Konstruktions-, als auch den Fertigungsaufwand. Bei einem Fahrrad gemäß der zweiten beschriebenen Druckschrift wird eine Änderung der Kettenkraft als Basis für die Motorsteuerung verwendet. Ist der Elektromotor jedoch kein direkt im Rad verbauter Nabenmotor, so muss dieser ebenfalls das Drehmoment über die Kette übertragen. Daher kann sich unter Umständen eine Verfälschung des Messergebnisses ergeben.

Den Stand der Technik nach dem Oberbegriff des Anspruchs 1 stellt hier den WO2011/113642 dar.

### Offenbarung der Erfindung

Mit der erfindungsgemäßen Antriebsvorrichtung mit den Merkmalen des Anspruch 1 werden die Aufgaben Drehmomentübertragung und Kraftmessung getrennt, da die Messung direkt am Lager erfolgen kann. Zusätzlich können die notwendigen Getriebeteile minimiert werden, wodurch sich ein Kostenvorteil ergibt. Weiterhin werden Konstruktions- und Fertigungsaufwand verringert. Die erfindungsgemäß gemessene Lagerkraft wird praktisch ausschließlich vom Fahrer erzeugt, der Elektromotor hat so gut wie keinen Einfluss. Daher kann durch eine sehr einfache Kraftmessung das vom Fahrer erzeugte Drehmoment bestimmt werden. Mit dem erfindungsgemäßen Steuergerät kann das gemessene Sensorsignal für die Ansteuerung des Elektromotors verwendet werden. Die genannten Vorteile rühren daher, dass das Getriebe drei nicht koaxiale und beabstandete Wellen aufweist, die Abtriebswelle, die Antriebswelle und die Tretwelle. Diese Wellen sind derart zueinander angeordnet, dass aus der Übertragung von Drehmoment Lagerkräfte der Abtriebswelle in definierte Richtungen entstehen. Das macht es möglich, die durch das Einbringen des Tretmoments erzeugte Lagerkraft unabhängig bzw. ohne große Beeinflussung von den anderen Lagerkräften zu bestimmen.

Im Folgenden wird als gleiche Richtung zweier Kräfte der Fall beschrieben, dass die Richtungsvektoren der Kräfte kolinear sind. Das bedeutet, die Kräfte können auch in Gegenrichtung wirken, wenn sie ein unterschiedliches Vorzeichen aufweisen. Von der Abtriebswelle wird ein Drehmoment auf die Nabe des anzutreibenden Rades des Elektrofahrrads übertragen. Dabei ist die Abtriebswelle derart gelagert, dass eine Lagerkraft in eine erste Richtung auftritt. Weiterhin werden Drehmomente von der Antriebswelle (Elektromotor) und der Tretwelle (Fahrer) auf die Abtriebswelle übertragen. Somit entstehen zwei weitere Lagerkräfte der Abtriebswelle: eine zweite Lagerkraft aus der Drehmomentübertragung von der Antriebswelle und eine dritte Lagerkraft aus der Drehmomentübertragung von der Tretwelle. Die Antriebswelle ist dabei mit einem Drehmoment von einem Elektromotor beaufschlagt, die Tretwelle mit dem Drehmoment aus dem Pedalantrieb. Insgesamt wirken daher Kräfte in drei Richtungen auf die Lagerung der Abtriebswelle. Die erste Lagerkraft in die erste Richtung, die zweite Lagerkraft in die zweite Richtung und die dritte Lagerkraft in die dritte Richtung. Ein Lagersensor ist derart an einem Lager der Abtriebswelle angebracht, dass er das Auftreten der dritten Lagerkraft bestimmen kann. Die erfindungsgemäße Anordnung der Wellen und des Lagersensors bewirkt, dass die erste und die zweite Lagerkraft praktisch keinen Einfluss auf die Messung des Lagersensors haben.

Die Unteransprüche zeigen bevorzugte Weiterbildungen der Erfindung.

Bevorzugt misst der Lagersensor hauptsächlich die gesamte dritte Lagerkraft oder zumindest eine Komponente der dritten Lagerkraft. Eine Komponente der dritten Lagerkraft ist für die Messung ausreichend, jedoch muss die gemessene Komponente anschließend durch trigonometrische Beziehungen in die dritte Kraft umgerechnet werden. Mit der dritten Lagerkraft und der bekannten Geometrie des Getriebes ist es möglich, das Drehmoment zu bestimmen, das der Fahrer in den Gesamtantrieb einbringt. Die Bestimmung ist sehr zuverlässig, da andere auftretende Drehmomente bei der Messung der dritten Lagerkraft keinen Einfluss haben.

Besonders bevorzugt sind die Richtungen der ersten Lagerkraft und der zweiten Lagerkraft gleich oder im Wesentlichen gleich, so dass beide Lagerkräfte in die erste Richtung wirken. Dies ermöglicht eine einfache Unterscheidung zwischen der Richtung, in welche die Lagerkräfte wirken, die nicht vom Fahrer erzeugt werden (erste Richtung) und der Richtung, in welcher die Lagerkräfte wirken, die vom Fahrer erzeugt werden (dritte Richtung). Da kleine Winkelabweichungen nur geringe Verfälschungen des Messergebnisses mit sich bringen, so dass diese evtl. sogar auf Grund des Messrauschens nicht erfasst werden können, muss keine exakte Gleichheit der ersten und zweiten Richtung gefordert werden.

Weiter besonders bevorzugt ist die dritte Richtung der dritten Lagerkraft senkrecht oder im Wesentlichen senkrecht zu der ersten Richtung der ersten Lagerkraft und der zweiten Lagerkraft. Damit ist sichergestellt, dass die erste Lagerkraft und die zweite Lagerkraft keinen Einfluss auf die Messung der dritten Lagerkraft haben. Wie bereits im vorherigen Fall ist auch hier eine exakte Orthogonalität nicht erforderlich, da geringe Verfälschungen vernachlässigbar sind.

Die Drehmomentübertragung von Abtriebswelle auf die Nabe des anzutreibenden Rades erfolgt bevorzugt durch eine erste Übertragungsvorrichtung, die Drehmomentübertragung von Antriebswelle auf Abtriebswelle erfolgt durch eine zweite Übertragungsvorrichtung und die Drehmomentübertragung von Tretwelle auf Abtriebswelle erfolgt durch eine dritte Übertragungsvorrichtung. Jede dieser Übertragungsvorrichtung kann ein umlaufendes Übertragungsmittel, wie z.B. eine Kette, enthalten. Auf diese Weise lässt sich ein Einsatz einer teuren Getriebestufe vermeiden, indem auf einen kostengünstigen Kettentrieb zurückgegriffen werden kann.

Alternativ kann jede der Übertragungsvorrichtungen vorzugsweise ein einstufiges Zahnradgetriebe enthalten. Insbesondere kann dies eine Kombination von innenverzahntem Rad und außenverzahntem Rad sein, die im Eingriff stehen. So kann beispielsweise auf der Tretwelle ein innenverzahntes und auf der Abtriebswelle ein außenverzahntes Zahnrad angebracht sein. Diese Variante hat den Vorteil, dass die Geräuschentwicklung des Fahrrads im Betrieb gesenkt werden kann.

In einer weiteren Alternative kann jede der Übertragungsvorrichtungen bevorzugt ein mehrstufiges Zahnradgetriebe enthalten. Auf diese Weise kann ein entsprechend übersetztes Drehmoment übertragen werden.

Es ist vorteilhaft, wenn der Lagersensor einen Lagerarm umfasst, in dem das Lager für die Abtriebswelle gehalten wird. Der Lagerarm nimmt an einem Ende das Lager der Abtriebswelle auf und ist an seinem anderen Ende schwenkbar gelagert. Das bedeutet, dass die Abtriebswelle um den festen Lagerpunkt des Lagerarms geschwenkt werden kann. Dieses Schwenken geschieht jedoch gegen die Rückstellkraft eines elastischen Elements, insbesondere einer Feder. Das elastische Element muss dabei ausgelegt sein, im Betrieb des Fahrrads hinreichend kleine Verschwenkungen zuzulassen. Die Rückstellkraft des elastischen Elements ist damit ein Maß für die senkrecht zum Lagerarm wirkende Lagerkraft auf die Abtriebswelle. Daher kann durch Messen der Rückstellkraft und umrechnen dieser Rückstellkraft nach den Hebelgesetzten die dritte Lagerkraft der Abtriebswelle bestimmt werden kann. Die dritte Lagerkraft kann, wie oben bereits beschrieben, in das vom Fahrer erzeugte Drehmoment umgerechnet werden. Insgesamt ist daher die Rückstellkraft des elastischen Elements ein Maß für das vom Fahrer erzeugte Drehmoment.

In einer bevorzugten Ausführungsform sind auf der Abtriebswelle zwei Freiläufe angeordnet, so dass die zweite Übertragungsvorrichtung und die dritte Übertragungsvorrichtung ein Drehmoment auf die Abtriebswelle übertragen können, der umgekehrte Fall jedoch nicht möglich ist. Damit wird verhindert, dass der Fahrer den Elektromotor antreiben kann, bzw. der Elektromotor oder das angetriebene Rad des Fahrrads die Tretwelle und damit den Kurbeltrieb antreibt.

Außerdem enthält die erfindungsgemäße Antriebsvorrichtung in einer vorteilhaften Ausführungsform ein Gehäuse, gegen das die Abtriebswelle, die Antriebswelle und die Tretwelle gelagert sind. Alternativ oder zusätzlich kann das Gehäuse auch ein Steuergerät aufnehmen, das den Elektromotor an Hand der Messdaten des Lagersensors steuert.

Zusätzlich betrifft die Erfindung ein Steuergerät. Das erfindungsgemäße Steuergerät kann aus dem Signal eines Lagersensors die Lagerkraft einer Abtriebswelle bestimmen, die ausschließlich durch das vom Fahrer erzeugte Drehmoment generiert wird. Das Steuergerät kann nun den Elektromotor nach einem vorgegebenen Programm ansteuern. Dies kann beispielsweise eine Aufstockung des manuellen Drehmoments auf ein eingestelltes Wunschdrehmoment, oder ein pauschales Hinzuaddieren eines gewissen Prozentsatzes zu dem manuellen Drehmoment beinhalten. Der erfindungsgemäße Aufbau des Getriebes macht dabei die Messung sehr robust und zuverlässig.

Das erfindungsgemäße Steuergerät berechnet bevorzugt die Lagerkraft aus einer Rückstellkraft eines elastischen Elements.

### Zeichnung

Nachfolgend werden bevorzugte Ausführungsbeispiele der Erfindung unter Bezugnahme auf die begleitende Zeichnung im Detail beschrieben. In der Zeichnung ist:
- Figur 1: eine schematische Ansicht der erfindungsgemäßen Antriebsvorrichtung in einer ersten Ansicht,
- Figur 2: die schematische Darstellung der erfindungsgemäßen Antriebsvorrichtung aus Figur 1 in einer weiteren Ansicht,
- Figur 3: eine Prinzipskizze zum Veranschaulichen, welche Bedeutung die gemessene Lagerkraft hat,
- Figur 4: die schematische Darstellung einer erfindungsgemäßen Antriebsvorrichtung in einer alternativen Ausführungsform, und
- Figur 5: die schematische Darstellung einer erfindungsgemäßen Antriebsvorrichtung in einer weiteren alternativen Ausführungsform.

### Ausführungsformen der Erfindung

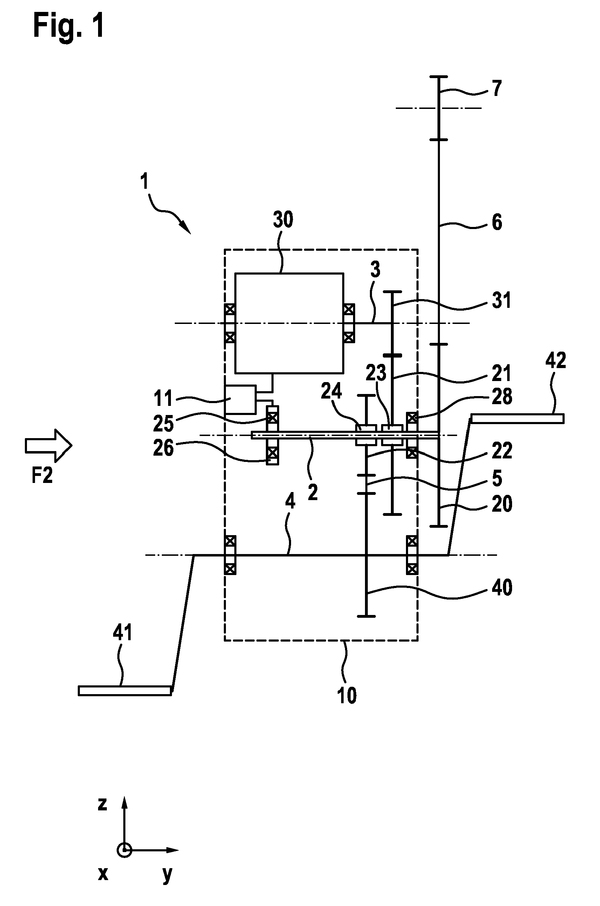

Die Figuren 1 bis 3 zeigen schematisch eine erste Ausführungsform der erfindungsgemäßen Antriebsvorrichtung.

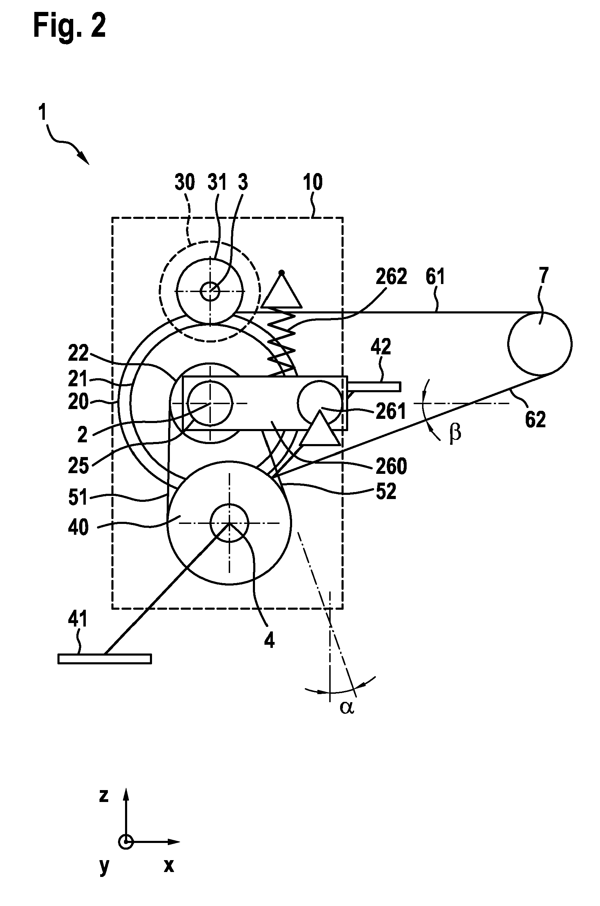

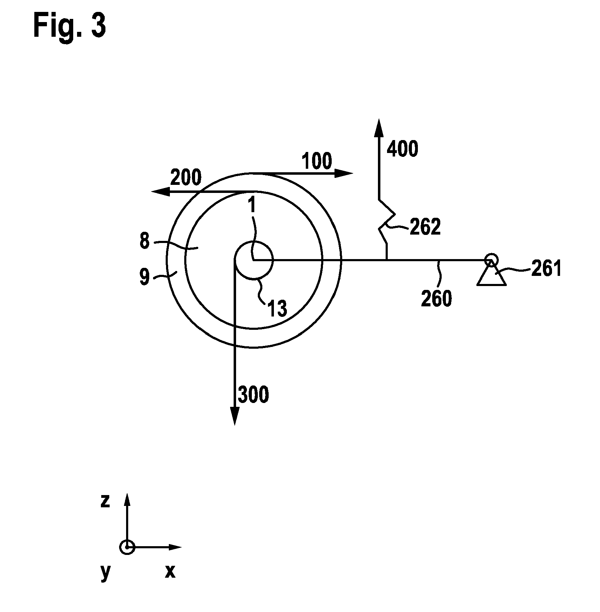

Figur 2 zeigt dieselbe Antriebsvorrichtung 1 wie Figur 1 aus einer anderen Perspektive. Diese ist in Figur 1 mit dem Pfeil F2 angedeutet. In der Mitte der Antriebsvorrichtung 1 befindet sich die Abtriebswelle 2. Diese kann über ein Kettenblatt 20 Energie auf die Nabe 7 des Antriebsrades eines Fahrrades übertragen. Auf der Antriebswelle 2 befindet sich weiter ein Zahnrad 21 und ein Kettenblatt 22, die jeweils über einen Freilauf 23, 24 mit der Antriebswelle 2 verbunden sind. Das Zahnrad 21 dient zum Einleiten eines Drehmoments, das von einem Elektromotor 30 erzeugt wird. Dazu überträgt der Elektromotor 30 ein Drehmoment auf eine Antriebswelle 3, deren Mittelachse in derselben Y-Z-Ebene liegt, wie die Mittelachse der Abtriebswelle 2 (vgl. Figur 2). Dies bedeutet, dass ein Antriebsritzel 31, das mit dem Zahnrad 21 in Eingriff steht, eine Kraft in X-Richtung (die erste Richtung) auf das Zahnrad 21 und damit auf die Lagerung der Abtriebswelle 2 überträgt (Lagerkraft 200 in Figur 3). Weiterhin ist eine Tretwelle 4 vorhanden, auf die der Fahrer des Fahrrads über Kurbeln 41 und 42 ein Drehmoment aufbringen kann. Ein Kettenblatt 40 ist rotationsfest auf der Tretwelle 4 montiert. Dieses ist mit dem Kettenblatt 22 über eine Kette 5 verbunden. Die Lage der Tretwelle 4 ist so gewählt, dass der das Kettenblatt 22 antreibende Teil der Kette 51 parallel zur Z-Richtung läuft. Der rücklaufende Teil der Kette 52 verläuft unter einem Winkel α gegen die z-Richtung. Ebenso treibt das auf der Abtriebswelle 2 montierte Kettenblatt 20 die Nabe 7 über eine Kette 6 an. Hierbei ist der treibende Teil der Kette 61 parallel zur X-Richtung (erste Richtung), während der rücklaufende Teil 62 der Kette unter dem Winkel β gegen die X-Richtung verläuft. Die Abtriebswelle 2 ist mit einem ersten Lager 25 gelagert, das an einem Lagersensor 26 zum Messen einer Lagerkraft in die Z-Richtung angebracht ist. Der Lagersensor kann dabei entweder an dem ersten Lager 25 oder an einem zweiten Lager 28 der Abtriebswelle 2 oder an beiden, dem ersten Lager 25 und dem zweiten Lager 28, angebracht sein. In dem in den Figuren 1 bis 3 gezeigten Ausführungsbeispiel besteht der Lagersensor 26 aus einem Lagerarm 260, der an einem Ende um einen festen Lagerpunkt 261 rotierbar gelagert ist. An dem anderen Ende ist an dem Lagerarm das erste Lager 25 der Abtriebswelle 2 angebracht. Parallel zur dritten Richtung ist eine Feder 262 an dem Lagerarm 260 befestigt, die an dem Gehäuse 10 gehalten wird. Damit ist die Rückstellkraft der Feder 262 ein Maß für die in Z-Richtung auf die Abtriebswelle 2 wirkende Lagerkraft 300. Diese Lagerkraft wird jedoch ausschließlich durch den antreibenden Teil 51 der Kette 5 erzeugt und ist daher ein Maß für das vom Fahrer auf die Tretwelle 4 aufgebrachte Drehmoment.

Die Kräfteverhältnisse an der Abtriebswelle 2 werden in Figur 3 detailliert dargestellt. Die vom Elektromotor erzeugte zweite Lagerkraft 200 wirkt kollinear zu der ersten Lagerkraft 100 der Kette 6 in der X-Richtung (erste Richtung). Im Gegensatz dazu wirkt die aus der Kette 5 resultierende dritte Lagerkraft 300 in Z-Richtung (dritte Richtung). Gemessen wird eine Rückstellkraft 400 in Z-Richtung, also der Richtung orthogonal zur ersten Richtung und kollinear zu der dritten Richtung. Die gemessene Rückstellkraft 400 am Lagerarm 260 lässt sich leicht durch das Hebelgesetz in die dritte Lagerkraft 300 der Abtriebswelle 2 umrechnen. Wie aus Figur 3 ersichtlich, ist die dritte Lagerkraft 300 die einzige Kraft, die kollinear zu der Rückstellkraft 400 wirkt. Somit haben der Elektromotor 30 und der Widerstand aus dem Antrieb (Kettenkraft in der Kette 6) keine Auswirkung auf die gemessene Größe.

Die dritte Richtung, muss nicht zwangsläufig orthogonal zur ersten Richtung sein, wie in Figur 3 gezeigt, sondern kann gegenüber der ersten Richtung einen beliebigen Winkel einnehmen. Jedoch dürften beide Richtungen nicht kollinear sein. Sollte sich ein Winkel zwischen der ersten und der dritten Richtung ergeben, so muss dieser bekannt sein. Dann kann über einfache trigonometrische Beziehungen die dritte Lagerkraft 300 in zwei Komponenten aufgeteilt werden, wobei eine Komponente in die erste Richtung und eine andere Komponente senkrecht zur ersten Richtung zeigt. In diesem Fall entspricht der Sinus des Winkels zwischen erster Richtung und dritter Richtung dem Verhältnis Rückstellkraft 400 x Hebeleinfluss / Lagerkraft 300. Für die Berechnung des vom Benutzer aufgebrachten Drehmoments spielt dies nur insofern eine Rolle, dass die Lagerkraft 300 durch einen zusätzlichen Rechenschritt aus der genannten trigonometrischen Beziehung berechnet werden muss.

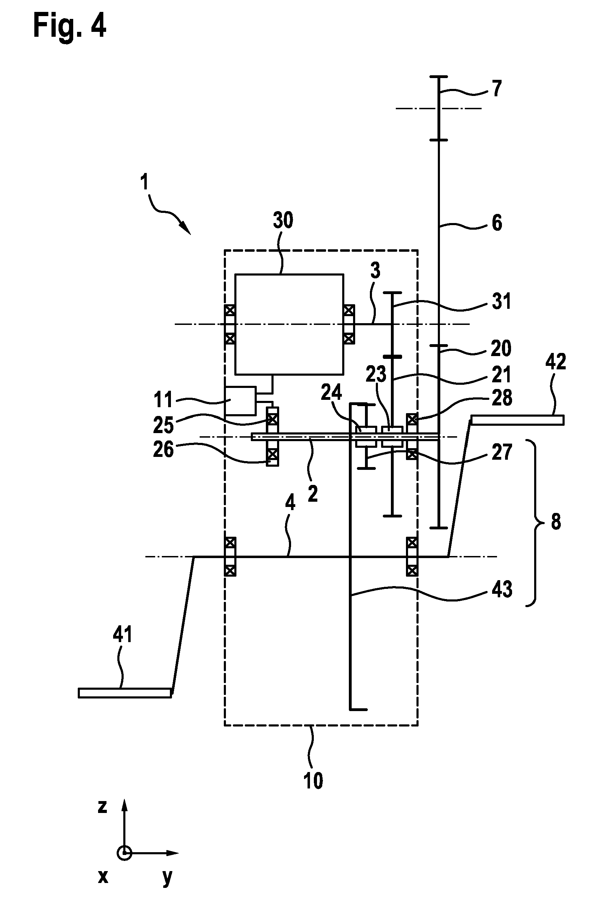

Figur 4 zeigt eine alternative Ausführungsform der erfindungsgemäßen Antriebsvorrichtung. Im Unterschied zu der in Figur 1 dargestellten Antriebsvorrichtung erfolgt die Drehmomentübertragung von der Tretwelle 4 auf die Abtriebswelle 2 über ein Zahnradgetriebe 8. Dazu ist ein innenverzahntes Zahnrad 43 (Hohlrad) an der Tretwelle 4 rotationsfest angebracht. Auf der Abtriebswelle 2 ist ein außenverzahntes Zahnrad 27 über einen Freilauf 24 angebracht, wobei die beiden Zahnräder 27 und 43 im Eingriff stehen. In dieser Variante ist die Geräuschkulisse deutlich geringer.

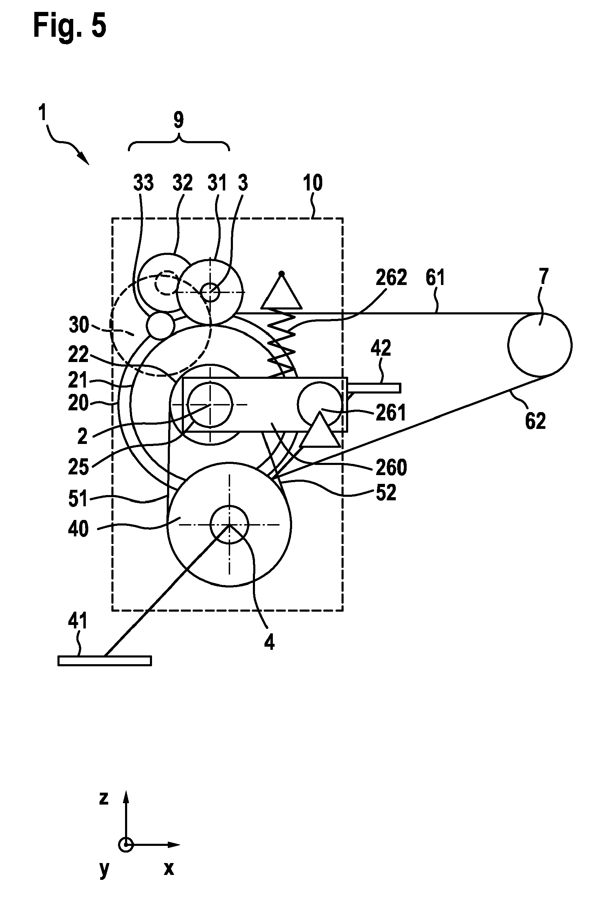

Eine weitere alternative Ausführungsform wird in Figur 5 dargestellt. Hier wird das Drehmoment des Elektromotors 30 nicht direkt auf die Abtriebswelle 2 übertragen, sondern es wird eine Getriebestufe 32 zwischengeschaltet. Somit überträgt das Motorritzel 33 ein Drehmoment auf die Zwischengetriebestufe 32, die wiederum ein Drehmoment auf das Antriebsritzel 31 überträgt, das wie in den vorherigen Ausführungsbeispielen das Drehmoment in die Abtriebswelle 2 einleitet. Diese Variante wird verwendet, wenn die Übersetzung bei der direkten Drehmomentübertragung nicht ausreichend ist.

## Patentansprüche

1. Antriebsvorrichtung (1) für ein Elektrofahrrad, umfassend:
- eine Abtriebswelle (2) mit mindestens einem Lager (25), wobei eine erste Übertragungsvorrichtung (20, 6, 7) ein Drehmoment auf mindestens ein Rad des Elektrofahrrades überträgt, wodurch eine erste Lagerkraft (100) in eine erste Richtung auf das Lager (25) wirkt,
- eine Antriebswelle (3), auf die ein von einem Elektromotor (30) erzeugtes Drehmoment wirkt, wobei eine zweite Übertragungsvorrichtung (21, 31) ein Drehmoment von der Antriebswelle (3) auf die Abriebswelle (2) überträgt, wodurch eine zweite Lagerkraft (200) in eine zweite Richtung auf das Lager (25) wirkt,
- eine Tretwelle (4), auf die ein von einem Fahrer erzeugtes Drehmoment wirkt, wobei eine dritte Übertragungsvorrichtung (40, 5, 22) ein Drehmoment von der Tretwelle (4) auf die Abtriebswelle (2) überträgt, wodurch eine dritte Lagerkraft (300) in eine dritte Richtung auf das Lager (25) wirkt, und
- einen Lagersensor (26), der eingerichtet ist, das Auftreten der dritten Lagerkraft (300) am Lager (25) zu bestimmen,
**dadurch gekennzeichnet, dass**
- die erste Richtung der ersten Lagerkraft (100) und die zweite Richtung der zweiten Lagerkraft (200) gleich oder im Wesentlichen gleich sind, und
- die erste Richtung der ersten Lagerkraft (100) und die dritte Richtung der dritten Lagerkraft (300) senkrecht oder im Wesentlichen senkrecht zueinander sind.

2. Antriebsvorrichtung nach Anspruch 1, **dadurch gekennzeichnet, dass** der Lagersensor (25) die gesamte dritte Lagerkraft (300) oder eine Komponente der dritten Lagerkraft (300) misst.

3. Antriebsvorrichtung nach einem der vorhergehenden Ansprüche, **dadurch gekennzeichnet, dass** die erste Übertragungsvorrichtung (20, 6, 7) und/oder die zweite Übertragungsvorrichtung (21, 31) und/oder die dritte Übertragungsvorrichtung (40, 5, 22) ein umlaufendes Übertragungsmittel (5, 6) und/oder ein einstufiges Zahnradgetriebe (8), insbesondere die Kombination von außenverzahntem Zahnrad (27) und innenverzahntem Zahnrad (43), und/oder ein mehrstufiges Zahnradgetriebe (9) umfasst.

4. Antriebsvorrichtung nach einem der vorhergehenden Ansprüche, **dadurch gekennzeichnet, dass** der Lagersensor (26) einen Lagerarm (260) umfasst, an dem das Lager (25) angebracht ist, und der um einen festen Lagerpunkt (261) rotierbar gelagert und über ein elastisches Element (262) fixiert ist, so dass eine Verschiebung der Abtriebswelle (2) gegen eine Rückstellkraft (400) des elastischen Elements (262) möglich ist und die Rückstellkraft (400) ein Maß für die dritte Lagerkraft ist.

5. Antriebsvorrichtung nach einem der vorhergehenden Ansprüche, **dadurch gekennzeichnet, dass** die zweite Übertragungsvorrichtung (21, 31) und die dritte Übertragungsvorrichtung (40, 5, 22) jeweils einen auf der Abtriebswelle (2) angebrachten Freilauf (23, 24) aufweisen, der eine Drehmomentübertragung von der Abtriebswelle (2) auf die Antriebswelle (3) oder auf die Tretwelle (4) verhindert.

6. Antriebsvorrichtung nach einem der vorhergehenden Ansprüche, umfassend ein Gehäuse (10), in dem die Abtriebswelle (2), die Antriebswelle (3) und die Tretwelle (4) gelagert sind und/oder in dem ein Steuergerät (11) angebracht ist, das eingerichtet ist, den Elektromotor (30) in Abhängigkeit von dem Signal des Lagersensors (26) anzusteuern.

7. Steuergerät (11) für ein Elektrofahrrad mit einer Antriebsvorrichtung nach einem der Ansprüche 1 bis 6, das eingerichtet ist aus einem Signal eines Lagersensors (26) eine Lagerkraft (300) einer Abtriebswelle (2) zu bestimmen, wobei die Lagerkraft (300) durch das Aufbringen eines von einem Fahrer erzeugten Drehmoments auftritt, um auf dessen Grundlage einen Elektromotor (30) nach einem festgelegten Muster anzusteuern, so dass der Elektromotor (30) ein festgelegtes Drehmoment auf die Abtriebswelle (2) überträgt.

8. Steuergerät nach Anspruch 7, das eingerichtet ist, die Lagerkraft (300) aus einer Rückholkraft eines elastischen Elements (262) zu berechnen.

9. Fahrrad mit einer Antriebsvorrichtung nach einem der Ansprüche 1 bis 6 und/oder einem Steuergerät nach einem der Ansprüche 7 oder 8.

## Claims

1. Drive apparatus (1) for an electric bicycle, comprising:
- an output shaft (2) with at least one bearing (25), a first transmission apparatus (20, 6, 7) transmitting a torque to at least one wheel of the electric bicycle, as a result of which a first bearing force (100) acts on the bearing (25) in a first direction,
- a drive shaft (3), on which a torque which is generated by an electric motor (30) acts, a second transmission apparatus (21, 31) transmitting a torque from the drive shaft (3) to the output shaft (2), as a result of which a second bearing force (200) acts on the bearing (25) in a second direction,
- a pedal shaft (4), on which a torque which is generated by a rider acts, a third transmission apparatus (40, 5, 22) transmitting a torque from the pedal shaft (4) to the output shaft (2), as a result of which a third bearing force (300) acts on the bearing (25) in a third direction, and
- a bearing sensor (26) which is set up to determine the occurrence of the third bearing force (300) on the bearing (25),
**characterized in that**
- the first direction of the first bearing force (100) and the second direction of the second bearing force (200) are identical or substantially identical, and
- the first direction of the first bearing force (100) and the third direction of the third bearing force (300) are perpendicular or substantially perpendicular with respect to one another.

2. Drive apparatus according to Claim 1, **characterized in that** the bearing sensor (25) measures the entire third bearing force (300) or a component of the third bearing force (300).

3. Drive apparatus according to either of the preceding claims, **characterized in that** the first transmission apparatus (20, 6, 7) and/or the second transmission apparatus (21, 31) and/or the third transmission apparatus (40, 5, 22) comprise/comprises a circulating transmission means (5, 6) and/or a single-stage gearwheel mechanism (8), in particular the combination of an externally toothed gearwheel (27) and an internally toothed gearwheel (43), and/or a multiple-stage gearwheel mechanism (9).

4. Drive apparatus according to one of the preceding claims, **characterized in that** the bearing sensor (26) comprises a bearing arm (260), on which the bearing (25) is attached, and which bearing arm (260) is mounted such that it can be rotated about a fixed bearing point (261) and is fixed via an elastic element (262), with the result that a displacement of the output shaft (2) is possible counter to a restoring force (400) of the elastic element (262), and the restoring force (400) is a measure of the third bearing force.

5. Drive apparatus according to one of the preceding claims, **characterized in that** the second transmission apparatus (21, 31) and the third transmission apparatus (40, 5, 22) in each case have a freewheel (23, 24) which is attached on the output shaft (2) and prevents a transmission of torque from the output shaft (2) to the drive shaft (3) or to the pedal shaft (4).

6. Drive apparatus according to one of the preceding claims, comprising a housing (10), in which the output shaft (2), the drive shaft (3) and the pedal shaft (4) are mounted and/or in which a control unit (11) is attached which is set up to actuate the electric motor (30) in a manner which is dependent on the signal of the bearing sensor (26).

7. Control unit (11) for an electric bicycle having a drive apparatus according to one of Claims 1 to 6, which control unit (11) is set up to determine a bearing force (300) of an output shaft (2) from a signal of a bearing sensor (26), the bearing force (300) occurring as a result of the application of a torque which is generated by a rider, in order to actuate an electric motor (30) on the basis thereof in accordance with a fixed pattern, with the result that the electric motor (30) transmits a fixed torque to the output shaft (2).

8. Control unit according to Claim 7 which is set up to calculate the bearing force (300) from a restoring force of an elastic element (262).

9. Bicycle having a drive apparatus according to one of Claims 1 to 6 and/or a control unit according to either of Claims 7 and 8.

## Revendications

1. Dispositif d'entraînement (1) pour un vélo électrique, comprenant :
- un arbre de prise de force (2) avec au moins un palier (25), un premier dispositif de transmission (20, 6, 7) transmettant un couple à au moins une roue du vélo électrique de sorte qu'une première force de palier (100) agisse dans une première direction sur le palier (25),
- un arbre d'entraînement (3) sur lequel agit un couple généré par un moteur électrique (30), un deuxième dispositif de transmission (21, 31) transmettant un couple de l'arbre d'entraînement (3) à l'arbre de prise de force (2) de sorte qu'une deuxième force de palier (200) agisse dans une deuxième direction sur le palier (25),
- un arbre de pédalier (4) sur lequel agit un couple généré par un cycliste, un troisième dispositif de transmission (40, 5, 22) transmettant un couple de l'arbre de pédalier (4) à l'arbre de prise de force (2) de sorte qu'une troisième force de palier (300) agisse dans une troisième direction sur le palier (25), et
- un capteur de palier (26) qui est prévu pour déterminer l'application de la troisième force de palier (300) sur le palier (25),
**caractérisé en ce que**
- la première direction de la première force de palier (100) et la deuxième direction de la deuxième force de palier (200) sont égales ou essentiellement égales, et
- la première direction de la première force de palier (100) et la troisième direction de la troisième force de palier (300) sont perpendiculaires ou essentiellement perpendiculaires l'une à l'autre.

2. Dispositif d'entraînement selon la revendication 1, **caractérisé en ce que** le capteur de palier (25) mesure l'ensemble de la troisième force de palier (300) ou une composante de la troisième force de palier (300).

3. Dispositif d'entraînement selon l'une quelconque des revendications précédentes, **caractérisé en ce que** le premier dispositif de transmission (20, 6, 7) et/ou le deuxième dispositif de transmission (21, 31) et/ou le troisième dispositif de transmission (40, 5, 22) comprennent un moyen de transmission (5, 6) en rotation et/ou un engrenage à roue dentée à un étage (8), en particulier la combinaison d'une roue dentée à denture extérieure (27) et d'une roue dentée à denture intérieure (43), et/ou un engrenage à roue dentée à plusieurs étages (9).

4. Dispositif d'entraînement selon l'une quelconque des revendications précédentes, **caractérisé en ce que** le capteur de palier (26) comprend un bras de palier (260) sur lequel est monté le palier (25) et qui est supporté de manière à pouvoir tourner autour d'un point de palier fixe (261) et qui est fixé par le biais d'un élément élastique (262) de telle sorte qu'un déplacement de l'arbre de prise de force (2) à l'encontre d'une force de rappel (400) de l'élément élastique (262) soit possible et que la force de rappel (400) soit une mesure de la troisième force de palier.

5. Dispositif d'entraînement selon l'une quelconque des revendications précédentes, **caractérisé en ce que** le deuxième dispositif de transmission (21, 31) et le troisième dispositif de transmission (40, 5, 22) présentent chacun une roue libre (23, 24) montée sur l'arbre de prise de force (2), laquelle empêche un transfert de couple de l'arbre de prise de force (2) à l'arbre d'entraînement (3) ou à l'arbre de pédalier (4).

6. Dispositif d'entraînement selon l'une quelconque des revendications précédentes, comprenant un boîtier (10) dans lequel sont supportés l'arbre de prise de force (2), l'arbre d'entraînement (3) et l'arbre de pédalier (4) et/ou dans lequel est monté un appareil de commande (11) qui est prévu pour commander le moteur électrique (30) en fonction du signal du capteur de palier (26).

7. Appareil de commande (11) pour un vélo électrique comprenant un dispositif d'entraînement selon l'une quelconque des revendications 1 à 6, prévu pour déterminer à partir d'un signal d'un capteur de palier (26), une force de palier (300) d'un arbre de prise de force (2), la force de palier (300) se produisant par l'application d'un couple généré par un cycliste afin de commander sur la base de ce couple un moteur électrique (30) suivant un modèle établi, de sorte que le moteur électrique (30) transmette un couple fixe à l'arbre de prise de force (2).

8. Appareil de commande selon la revendication 7, prévu pour calculer la force de palier (300) à partir d'une force de rappel d'un élément élastique (262).

9. Vélo comprenant un dispositif d'entraînement selon l'une quelconque des revendications 1 à 6 et/ou un appareil de commande selon l'une quelconque des revendications 7 ou 8.
